# EUROPEAN PATENT APPLICATION

(11) **EP 4 840 525 A1**
(43) Date of publication of application: **18.11.2026**
(21) Application number: 26178965.5
(22) Date of filing: 15.05.2026
(51) Int. Cl.: A63F 13/69, A63F 13/55, A63F 13/60, A63F 13/355, A63F 13/525, A63F 13/847

(54) **GAME SERVER, GAME PROCESSING METHOD, AND GAME PROGRAM**

(30) Priority: 16.05.2025 JP 2025082792
(71) Applicant: SNK Corporation, Osaka-shi, Osaka 5320003 (JP)
(72) Inventor: FUJISHIGE, Kazuhiro, OSAKA-SHI, OSAKA (JP)
(74) Representative: Algemeen Octrooi- en Merkenbureau B.V.

(57) **Abstract**

A game server (10) includes: a reception unit (11) configured to receive operation commands from a plurality of players; a display (12) configured to display, in a virtual space (100), characters operable by the players; a first controller (131) configured to control, as a first character (1), a character that images another character in accordance with the operation commands; a second controller (132) configured to control, as a second character (2), a character other than the first character (1) on the basis of the operation commands; a detection unit (133) configured to detect whether the second character (2) enters an imaging range (300) of the first character (1); a facial expression changing unit (134) configured to change a facial expression of the second character (2) when the second character (2) enters the imaging range (300); and an output unit (14) configured to output, to an external terminal, an image including the second character (2) having the facial expression changed by the facial expression changing unit (134), as an image captured by the first character (1).

## Description

### BACKGROUND OF THE INVENTION

### 1. Field of the Invention

The present invention relates to a game server, a game processing method, and a game program for imaging characters in a game.

### 2. Description of Related Art

Games in which players engage in one-on-one battles and games in which multiple players engage in battles have become popular in recent years. A player can perform various behaviors (or actions) by operating a character in a virtual space in the game.

Japanese Unexamined Patent Application Publication No. 2023-115237 discloses a game system in which a virtual camera for display and a virtual camera for appeal are arranged in a virtual space of a game. In this case, a sense of realism that a cameraman is performing imaging in the virtual space of the game can be provided by causing a battlefield cameraman to move with the virtual camera for appeal held. Japanese Unexamined Patent Application Publication No. 2023-016051 discloses an information processing apparatus for a game having a plurality of players, in which a player in charge of imaging can smoothly perform imaging by using an imaging mode.

### SUMMARY OF THE INVENTION

Incidentally, a massively multiplayer online (MMO) game in which a considerable number of users participate is present. In an MMO, since a considerable number of characters of users access a server, the facial expressions of the characters may be left unchanged to reduce a processing load on the server. On the other hand, screenshots may be captured in such a game, but if the facial expressions of the characters are kept unchanged, a problem may occur in that realism of the obtained screenshots may be impaired.

Accordingly, the present disclosure has been made in view of the above problem, and an object of the present disclosure is to provide a game server capable of imaging a character operated by another player with a facial expression suitable for an atmosphere in the game as well as reducing a processing load on the server.

A game server according to an embodiment of the present invention may include: a reception unit configured to receive operation commands from a plurality of players; a display configured to display, in a virtual space, characters operable by the players; a first controller configured to control, as a first character, a character that images another character in accordance with the operation commands; a second controller configured to control, as a second character, a character other than the first character on the basis of the operation commands; a detection unit configured to detect whether the second character enters an imaging range of the first character; a facial expression changing unit configured to change a facial expression of the second character when the second character enters the imaging range; and an output unit configured to output, to an external terminal, an image including the second character having the facial expression changed by the facial expression changing unit, as an image captured by the first character.

In the game server according to an embodiment of the present invention, the imaging range may be determined by at least one of an imaging direction of the first character, an imaging angle of view, coordinates of the first character, and a state of the first character.

In the game server according to an embodiment of the present invention, the facial expression changing unit may change the facial expression of the second character on the basis of at least one of an operation command of a player operating the second character, a game situation when the first character performs imaging, and an in-game parameter.

The game server according to an embodiment of the present invention may further include: a quality changing unit configured to change a quality of imaging by adjusting a viewing angle at which the first character performs imaging in accordance with external information including the imaging range, an angle of view, and a type of the external terminal.

A game processing method according to an embodiment of the present invention may cause a computer to execute: a receiving step of receiving operation commands from a plurality of players; a displaying step of displaying, in a virtual space, characters operable by the players; a first controlling step of controlling, as a first character, a character that images another character in accordance with the operation commands; a second controlling step of controlling, as a second character, a character imaged by the first character on the basis of the operation commands; a detecting step of detecting whether the second character enters an imaging range of the first character; a facial expression changing step of changing a facial expression of the second character when the second character enters the imaging range; and an outputting step of outputting, to an external terminal, an image including the second character having the facial expression changed by the facial expression changing step, as an image captured by the first character.

A game program according to an embodiment of the present invention may cause a computer to execute: a receiving function of receiving operation commands from a plurality of players; a displaying function of displaying, in a virtual space, characters operable by the players; a first controlling function of controlling, as a first character, a character that images another character in accordance with the operation commands; a second controlling function of controlling, as a second character, a character other than the first character on the basis of the operation commands; a detecting function of detecting whether the second character enters an imaging range of the first character; a facial expression changing function of changing a facial expression of the second character when the second character enters the imaging range; and an outputting function of outputting, to an external terminal, an image including the second character having the facial expression changed by the facial expression changing function, as an image captured by the first character.

According to the game server, the game processing method, and the game program according to the present disclosure, a game server is provided that images a character operated by another player with a facial expression suitable for an atmosphere in the game as well as reducing a processing load on the server.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 shows an example of a system diagram illustrating a configuration of a game system according to a present disclosure,
FIG. 2 shows a block diagram illustrating an example of a configuration of a game server according to the present disclosure,
FIG. 3 shows a diagram illustrating an example of a virtual space generated by the game server according to the present disclosure,
FIGS. 4A to 4C show diagrams illustrating an example of changing a facial expression of a character according to a present embodiment,
FIGS. 5A and 5B show diagrams illustrating an example of changing a facial expression of a second character in Facial Expression Change Example 1,
FIGS. 6A and 6B show diagrams illustrating an example of changing a facial expression of the second character in Facial Expression Change Example 2,
FIGS. 7A and 7B show diagrams illustrating an example of changing a facial expression of the second character in Facial Expression Change Example 3,
FIGS. 8A and 8B show diagrams illustrating an example of changing a facial expression of the second character in Facial Expression Change Example 4,
FIG. 9 shows a flowchart illustrating an example of changing a facial expression of the second character, and
FIG. 10 shows a flowchart illustrating an example of a processing flow in accordance with a situation in which each player participates in the game.

### DETAILED DESCRIPTION OF EMBODIMENTS

### Overview

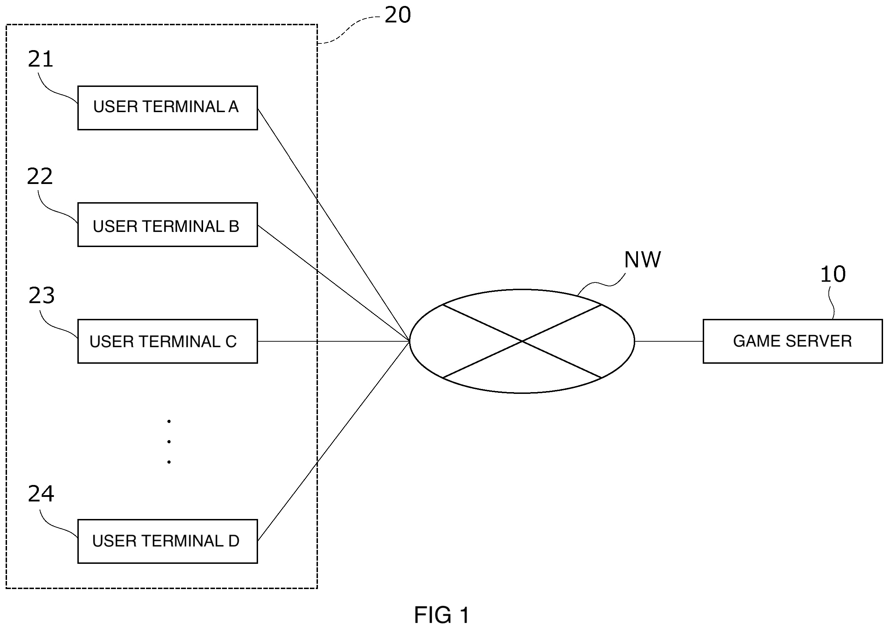

FIG. 1 shows an example of a system diagram related to a game server 10 according to the present disclosure. As illustrated in FIG. 1, the game system includes a game server 10 and a plurality of user terminals 20 (a user terminal A 21, a user terminal B 22, a user terminal C 23..., and a user terminal D 24), which are connected to be able to communicate with one another via a network NW.

The game server 10 is directed to a server that provides a game service and, especially, provides a massively multiplayer game service, creates a virtual space having a plurality of players, and manages various types of data of the players in the virtual space and processes various types of information. Specifically, the game server 10 receives operation commands from the user terminals 20 and operates characters that are operable by the players in accordance with the operation commands. In this case, the game server 10 analyzes information including motions of the characters in the virtual space of the game, changes in coordinate information of the characters, motions of various contents in the virtual space, interactions between the characters and the contents in the virtual space, interactions among the contents in the virtual space, and interactions among the characters in the virtual space, and achieves different effects in accordance with the type of information. Further, in the game provided by the game server 10, a player can operate a cameraman character that images a character operated by another player, and, when the imaged character (or content) includes a facial expression, the game server 10 changes the facial expression of the imaged character and provides, to an external terminal, a captured image having an enhanced sense of realism.

Characters according to the present disclosure can be directly moved and operated by players. Depending on the type of game and the game system, the types and roles of characters may be further classified. For example, when the game provided by the game server 10 is directed to a fighting game or a role playing game (RPG), a character may be directly moved and operated by a player, and the character may interact, in the virtual space, with various contents or with a character operated by another player in accordance with an operation command from the player. The characters according to the present embodiment may be classified as a second character that participates in the game as a general player and experiences the game content, and a first character that images behaviors of the character described above.

The contents according to the present disclosure are controlled by the game server 10, implements interaction with a character operated by a player, or are disposed at a predetermined position in the virtual space and executes a function as a decorative function. As an example, the contents may be directed to a monster in the virtual space, a non-playable character (NPC) capable of communicating with a player, or a decorative plant or building in the virtual space that is destructible or indestructible.

The interaction according to the present disclosure may be classified as interaction among characters, interaction among contents, and interaction between a character and content, and an effect may be embodied in accordance with a result of the interaction. For example, when a character A defeats a character B, the character B may be arranged in the virtual space in a defeated state. The interaction according to the present embodiment may include movement of a character (forward movement and rearward movement), attack, evasion, skill activation, jumping, and crouching.

The user terminal 20 is directed to a dedicated or general-purpose electronic device for a player to play the game. For example, the user terminal 20 may be directed to a home video game console, a handheld game machine, an arcade game machine, a personal computer, or a smartphone tablet, and may transmit various commands to the game server 10 by using a console, a controller, and a keyboard, for example. In the present embodiment, a plurality of user terminals 20 are provided (the user terminal A 21, the user terminal B 22, the user terminal C 23..., and the user terminal D 24), each user terminal may be connected to the game server 10 via the network NW, and information may be exchanged between the game server 10 and the user terminals 20, or among the user terminals. When the game server 10 exchanges information with the user terminals 20, the user terminals 20 may transmit, to the game server 10, operation commands for characters in the virtual space, and the game server 10 may execute interaction between characters operable by players and contents in the virtual space on the basis of the operation commands from the players. Further, when information is exchanged between the user terminal A 21 and the user terminal 22, information entered by each player on the user terminal 20 may be uploaded to or downloaded from the game server 10 via the network NW, thereby allowing communication among the players.

The network NW may include a wireless network and a wired network. As an example, the network NW may correspond to a wireless LAN (WLAN), a wide area network (WAN), wireless LANs, a fourth-generation communication system (4G), a fifth-generation communication system (5G), a sixth-generation communication system (6G) or later mobile communication system, for example. The network NW is not limited to these examples and may correspond to, for example, a public switched telephone network (PSTN), optical line, or satellite communication network. The network NW may also be a combination of these.

### Configuration

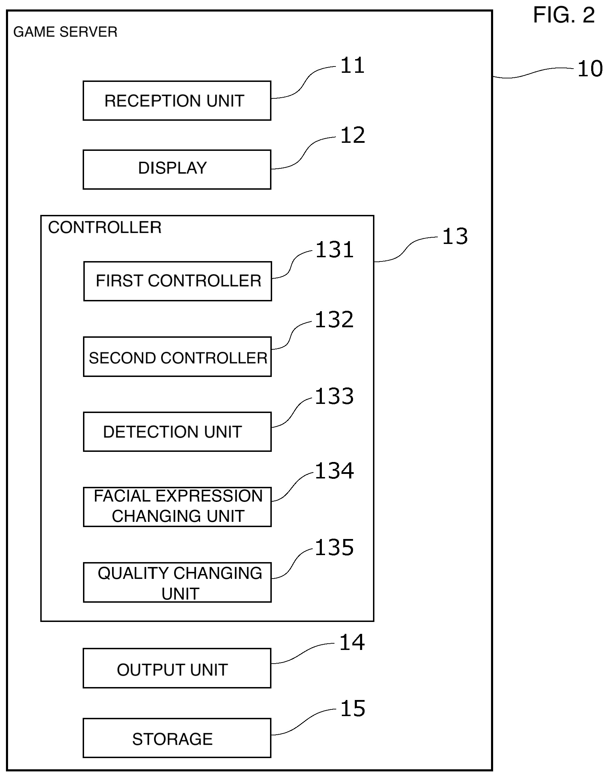

FIG. 2 shows a block diagram illustrating a configuration of the game server 10 according to the present embodiment. The game server 10 includes a reception unit 11, a display 12, a controller 13 (further including a first controller 131, a second controller 132, a detection unit 133, a facial expression changing unit 134, and a quality changing unit 135), an output unit 14, and a storage 15. The configuration of the game server 10 according to the present embodiment is not limited to the above configuration, and the game server 10 may be connected to an external terminal that uses, for example, augmented reality (AR), virtual reality(VR), and mixed reality (MR). Each configuration will be described in detail below.

The reception unit 11 is configured to receive various types of information from a player, and the various types of information received by the reception unit 11 are used as information for the controller 13 to execute various functions. Specifically, the reception unit 11 may receive an operation command for operating a character, entered by a player on the user terminal 20, or may receive a history of communication performed in the game, entered by the player on the user terminal 20. The operation command according to the present embodiment is not especially limited, and may be a command indicating whether to participate in the game as a cameraman player (hereinafter, referred to as a first character), a command indicating movement of a character from the user terminal 20, a command indicating attack or defense of a character, a command for using items in the game, a command for operating a menu, or a command indicating selection of a quest or mission.

The display 12 is configured to display, in the virtual space, a character operable by a player. Specifically, the display 12 displays a history of communication in the game, characters in the virtual space, contents, effects resulting from interactions among characters, effects resulting from interactions among contents, effects resulting from interactions between contents and characters, the in-game environment, and all events after an effect has occurred. Further, the display 12 according to the present disclosure may display the contents and characters in the virtual space on the user terminal 20 in an overlaid manner within the virtual space.

The controller 13 corresponds to a processor that executes processing relating to the game provided by the game server 10 in accordance with various types of information received from the user terminals 20 and various programs and various data stored in the storage 15, thereby implementing functions to be implemented by the game server 10. Each player transmits, from the own user terminal of the player, operation commands to the controller 13 for a character operable by the player. Further, the controller 13 according to the present embodiment includes the first controller 131, the second controller 132, the detection unit 133, the facial expression changing unit 134, and the quality changing unit 135, and configurations thereof may execute various functions on the basis of various types of information received from the reception unit 11. Functions of the respective configurations will be described below.

The first controller 131 is configured to control, as a first character, a character that images another character on the basis of an operation command received by the reception unit 11. The first character according to the present disclosure may also be referred to as a cameraman, a battlefield cameraman, or a cameraman player. Specifically, the first controller 131 receives an operation command from a user terminal of a player participating in the game as the first character, and controls the first character on the basis of the operation command. After the player expresses an intention to participate in the game as the first character, the first controller 131 may receive various operation commands from the user terminal 20 corresponding to that player and may control the first character. Controlling the first character may include receiving an operation command for the first character from the player, causing the first character to operate in the virtual space in which the first character is provided, and providing an event in the virtual space accompanying the operation. Further, when the first controller 131 controls the first character on the basis of an operation command received from the user terminal 20, the first character may execute a movement function, an imaging function, and functions related thereto. Moreover, the number of first characters according to the present embodiment is not limited to one, and a plurality of first characters may be provided depending on the number of participants in the game, the type of the game, and an event in the game, for example. Furthermore, imaging according to the present embodiment is not limited to still-image capturing, and may include moving-image capturing.

The second controller 132 is configured to control, as a second character, a character other than the first character. The second character corresponds to a character that does not have a role as a cameraman. Specifically, the second controller 132 receives an operation command from a user terminal of a player participating in the game as the second character, and controls the second character on the basis of the operation command. After the player expresses an intention to participate in the game as the second character, the second controller 132 may receive various operation commands from the user terminal 20 corresponding to that player and may control the second character. Controlling the second character may include receiving an operation command for the second character from the player, causing the second character to operate in the virtual space in which the second character is provided, and, especially, providing an event imaged by the first character in the virtual space. When the second controller 132 controls the second character on the basis of an operation command received from the user terminal 20, the second character may execute functions other than an imaging function (for example, a movement function, an attack function, and a defense function). Further, the number of second characters according to the present embodiment is not limited to one, and two or more second characters may be provided.

The detection unit 133 is configured to detect whether a face of a character capable of having a facial expression or content is included within an imaging range of the first character. In the present embodiment, a range of field of view and the imaging range are different from each other. The range of field of view corresponds to a range that can be displayed on a screen of the first character, and the imaging range corresponds to a range captured within the range of the field of view of the first character. The imaging range is defined by at least one of an imaging direction of the first character, an imaging angle of view, coordinates of the first character, and a state of the first character. Further, the size of the imaging range may be determined by a field of view set in the game, the environment in the game, and time in the game, for example. As an example, when the field of view of the first character is wide, the first character captures a wider range at one time, thereby achieving comprehensive recognition of characters and contents within the imaging range. In contrast, when the field of view of the first character is narrow, the first character captures a narrower range at one time, thereby achieving recognition of characters and contents within the narrower imaging range. Further, the imaging range of the first character may vary depending on time and weather in the virtual space, and, when time in the game changes over time, the daytime imaging range of the first character may be set to be wider than the nighttime imaging range. When the second character enters the imaging range of the first character, the detection unit 133 may detect the second character and may image the second character as a target.

The facial expression changing unit 134 is configured to change a facial expression of the second character when the second character enters the imaging range of the first character. The facial expression according to the present disclosure is directed to an element for visually displaying an emotion and/or reaction of the character through interaction between the character and another character or an event in the game. Further, the facial expression changing unit 134 is configured to change a facial expression of the second character within the imaging range of the first character. Specifically, the facial expression changing unit 134 changes a facial expression of the second character 2 in accordance with a game situation in the virtual space, or a result of interaction with another character or content in the virtual space with respect to the second character. The game situation in the virtual space according to the present disclosure may include a situation of an event involving the second character 2 in the virtual space, time in the virtual space (in-game time), a change in the environment of the game, and the number of players remaining in the virtual space, for example. As an example, when the number of players participating in the game gradually decreases, the facial expression changing unit 134 may change a facial expression of the second character within the imaging range of the first character to a facial expression indicating fear, and, when the weather in the virtual space changes from fine to rainy, the facial expression changing unit 134 may change a facial expression of the second character within the imaging range of the first character to a facial expression indicating depression. On the other hand, when interaction is being performed with another character in the virtual space or with content in the virtual space, the facial expression changing unit 134 may change the facial expression of the second character in accordance with the type of the interaction. The interaction according to the present embodiment may include other actions such as attack, defense, or exchange of an item between characters, and attack, defense, or exchange of an item between a character and content. As an example, when the second character is attacked by another character within the imaging range of the first character, the facial expression changing unit 134 may change the facial expression of the second character to a painful facial expression or a crying facial expression, and, when the second character receives an item from another character or is rescued by another character within the imaging range of the first character, the facial expression changing unit 134 may change the facial expression of the second character to a facial expression indicating enjoyment or joy. Further, when the second character is fighting content in the virtual space (for example, a monster or a creature in the virtual space) within the imaging range of the first character, the facial expression changing unit 134 may change the facial expression of the second character to a stern facial expression or a brave facial expression.

The quality changing unit 135 is configured to change the quality of imaging by adjusting a range of field of view being imaged by the first character in accordance with the imaging range of the first character, the angle of view, and the type of imaging device used by the first character. The quality of imaging according to the present disclosure refers to the quality of a captured image obtained by imaging, and is generally determined on the basis of factors such as the number of pixels and associated resolution, color reproduction and balance, and focus. Further, the visual angle at which imaging is performed according to the present embodiment refers to a viewpoint or field of view that the first character perceives either directly or through the imaging device. Depending on the type of the game or the type of the imaging device used by the first character, the visual angle may be classified into a first-person viewpoint, a third-person viewpoint, a fixed viewpoint, or a free viewpoint. Further, the first character may image the second character by using a device, and the quality changing unit 135 may change the quality of still images or moving images in accordance with the type of the device. Moreover, when the first character images the second character by using a virtual camera, the quality changing unit 135 may change the quality of still images or moving images obtained by the virtual camera in accordance with imaging parameters of the virtual camera set in advance.

The output unit 14 is configured to output, to an external terminal, an image including the second character having the facial expression changed by the facial expression changing unit 134 as an image captured by the first character. Specifically, when the first character images the changed facial expression of the second character, the output unit 14 may output the changed facial expression itself to the user terminal as the external terminal via the network NW, or may output, to the user terminal as the external terminal, a captured image including the character having the changed facial expression. The external terminal according to the present embodiment is not limited to the user terminal, and may correspond to a terminal that provides a social networking service (SNS) or a terminal that allows a user to grasp a situation in the game without participating in the game. This allows a user of the external terminal to grasp the situation in the virtual space as well. Further, the output unit 14 according to the present disclosure may not only output a captured image to the user terminal but may also share, among players, messages entered by the players on their user terminals and images uploaded to the game server 10, and may output them to the players.

The storage 15 is directed to a storage medium that stores various programs and data needed by the game server 10 to operate. The storage 15 may be implemented by, for example, but not limited to, a hard disk drive (HDD), solid state drive (SSD), or flash memory. Further, the storage 15 may configure read only memory (ROM) or random access memory (RAM) as a work area in executing the program. Moreover, the storage 15 may store operation commands of players, histories of communication with other players, states of characters operated by the players, states of respective objects in the virtual space, and progress of the game, for example.

### Overview of Virtual Space

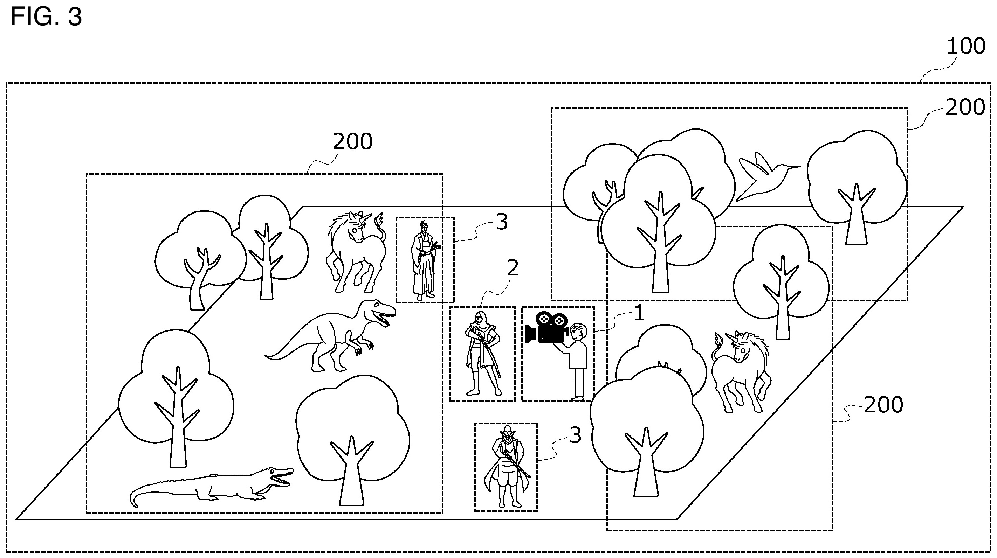

FIG. 3 shows a diagram illustrating an example of a virtual space 100 generated by the game server 10 according to the present disclosure. In the virtual space 100 according to the present disclosure, objects such as a first character 1, a second character 2 imaged by the first character 1 (hereinafter, referred to as the second character 2), a second character not imaged by the first character (hereinafter, referred to as a third character 3), and content 200 in the virtual space are arranged. The objects are controlled by corresponding configurations of the game server 10. As an example, the first controller 131 controls the first character 1, and the second controller 132 controls the second character 2 and the third character 3. Objects other than the first character 1, the second character 2, and the third character 3, i.e., the contents 200 in the virtual space may be controlled by the controller 13 of the game server 10.

The contents 200 in the virtual space according to the present disclosure may be independently controlled by the game server 10, respectively. Specifically, depending on the type of object, the game server 10 may execute, by using different algorithms, changes in behaviors (or movement trajectories) of the respective objects in the virtual space, changes in stages of the objects, interactions among objects not controlled by players, environmental changes and seasonal changes in the virtual space, or changes of time in the game. As an example, when the content 200 in the virtual space, such as an enemy, patrols in a predetermined area of the virtual space, the game server 10 may move the object along a route determined in advance or may cause the object to move back and forth from side to side by presetting such movement. The present disclosure is not limited thereto, and the game server 10 may further include artificial intelligence (AI) technology and may have a technique for computing a shortest path for an object in a predetermined area or for causing the object to move as well as avoid an obstacle by using a navigation mesh.

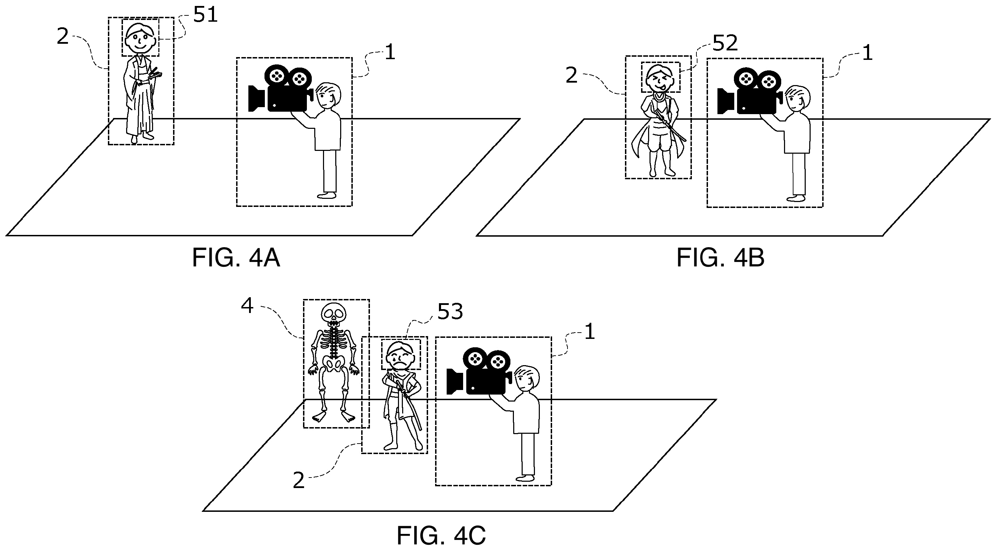

FIGS. 4A to 4C show diagrams illustrating an example of changing facial expressions of a character in the present embodiment. FIG. 4A shows a diagram illustrating an example in which the second character 2 has not entered the imaging range of the first character 1. In the present embodiment, the first character 1 and the second character 2 move freely in the virtual space, and, when the second character 2 has not entered the imaging range of the first character 1, the game server 10 does not change the facial expression of the second character 2.

FIG. 4B shows a diagram illustrating an example in which the second character 2 has entered the imaging range of the first character 1. When the second character 2 has entered the imaging range of the first character 1, the game server 10 changes the facial expression of the second character 2 within the imaging range of the first character 1. Specifically, the game server 10 may store sprites having different facial expressions in advance in the storage 15 and may replace them in accordance with a situation in which the second character 2 enters the imaging range of the first character 1. As an example, when the second character 2 has entered the imaging range of the first character 1, the game server 10 may read, from the storage 15, a facial expression for change with respect to the second character 2 within the imaging range of the first character 1 and may replace and change the facial expression of the second character 2 from a basic facial expression 51 to a first facial expression 52 that has been read out. In contrast, when the second character 2 has not entered the imaging range of the first character 1, the game server 10 may maintain the facial expression of the second character 2 as the basic facial expression 51. The present disclosure is not limited thereto, and the game server 10 may use facial expression data created in advance and may change the facial expression in accordance with a situation in which the second character 2 enters the imaging range of the first character 1.

The facial expression data according to the present disclosure corresponds to data used for changing a facial expression of a character in the game, and may be, for example, a general blend-shape image or data used for each facial part of the character. As an example, when the second character 2 has entered the imaging range of the first character 1, the game server 10 may read the facial expression data from the storage 15 and may change the facial expression of the second character 2 from the basic facial expression 51 to the first facial expression 52 on the basis of the facial expression data within the imaging range of the first character 1. In contrast, when the second character 2 has not entered the imaging range of the first character 1, the game server 10 may maintain the facial expression of the second character 2 as the basic facial expression 51. Further, the situation according to the present disclosure is not especially limited, and, when the second character 2 has entered the imaging range of the first character 1, the game server 10 may read the facial expression data from the storage 15 and may change the facial expression of the second character 2 to the facial expression data read from the storage 15. In contrast, when the second character 2 has not entered the imaging range of the first character 1, the game server 10 need not read the facial expression data from the storage 15, and the facial expression of the second character 2 may remain unchanged.

FIG. 4C illustrates an example in which, when the second character 2 has entered the imaging range of the first character 1 and another content in the virtual space has entered the imaging range, the facial expression of the second character 2 is further changed. After the second character 2 has entered the imaging range of the first character 1, the game server 10 may detect whether the second character 2 interacts with another content in the virtual space. As an example, when a trigger character 4 other than the second character 2 is detected within the imaging range of the first character 1, the game server 10 may change the facial expression of the second character 2 to a second facial expression 53 resulting from interaction with the trigger character 4. In contrast, when the trigger character 4 other than the second character 2 is not detected within the imaging range of the first character 1, the game server 10 may maintain the facial expression of the second character as the first facial expression 52.

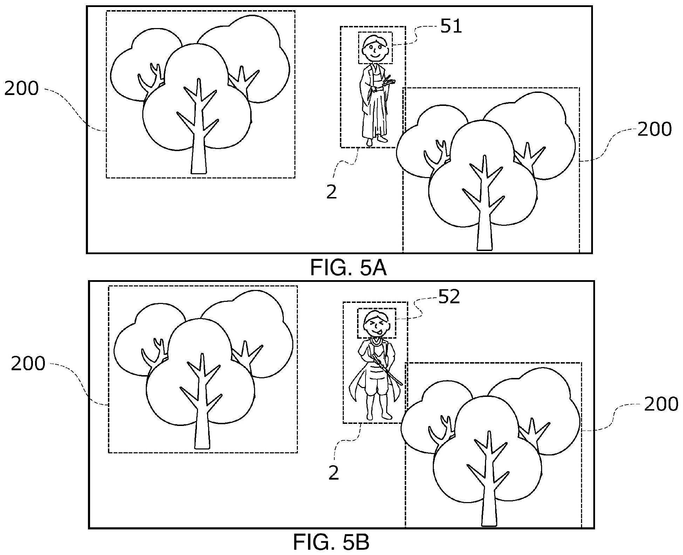

Hereinafter, with reference to FIGS. 5A to 8B, in what way the facial expression of the second character 2 changes on the screen of each character will be described in detail. Characters participating in the game according to the present disclosure may be classified as a first character 1 that images another character, a second character 2 that participates in the game and is imaged by the first character 1, and a third character 3 that participates in the game and is not imaged by the first character 1.

### Facial Expression Change Example 1

FIGS. 5A and 5B illustrate an example of displaying the second character 2 on a screen of a user terminal of a player that operates the first character and on a screen of a user terminal of a player that operates the third character 3. Specifically, FIG. 5A shows a diagram illustrating an example of a screen of the user terminal 20 of the player that operates the third character 3. When the second character 2 enters a range of the field of view of the third character 3, the game server 10 may maintain the basic facial expression 51 of the second character 2 without changing it. Further, FIG. 5B shows a diagram illustrating an example of a screen of the user terminal 20 of the player that operates the first character 1. When the second character 2 enters the imaging range of the first character 1, the game server 10 may change the facial expression of the second character 2 from the basic facial expression 51 to the first facial expression 52. This allows the facial expression of the second character 2 to differ depending on the screens of the different user terminals. Further, the facial expression may be changed when the first character 1 holds up a camera, and may remain unchanged when the first character 1 does not hold up a camera.

Moreover, coordinate information of the first character 1, the second character 2, the third character 3, and the contents in the virtual space allows the game server 10 to determine whether the second character 2 has entered the range of the field of view or the imaging range of the first character 1, or whether the second character 2 has entered the range of the field of view of the third character. In the virtual space according to the present embodiment, each character and each content has respective coordinate information.

The coordinate information of the characters and contents changes over time on the basis of information indicating operation commands received by the game server 10 from the respective user terminals 20. As an example, when the second character 2 is located at point A and is given a coordinate range of (10 to 20, 30 to 40, 50 to 60), the game server 10 may move the second character 2 from point A to point B on the basis of an operation command from the player through the user terminal 20, and may simultaneously change the coordinate information of point A to the coordinate information of point B. Further, when a content is destroyed or moved by a character through interaction with the character, the game server 10 may change the coordinate information of the content to coordinate information after destruction or after movement.

On the other hand, the imaging range according to the present embodiment is determined by information such as the position of the device disposed by the first character 1 (for example, a virtual drone), the imaging direction of the first character 1, and the imaging angle of view of the first character 1. As an example, when the game server 10 sets the coordinate information of the device to (100, 50, 200), the field of view to 60 degrees, a near clipping plane to a position 1 m from the first character 1, and a far clipping plane to a position 100 m from the first character 1, the first character 1 may capture an image for a predetermined imaging range on the basis of the conditions described above.

### Facial Expression Change Example 2

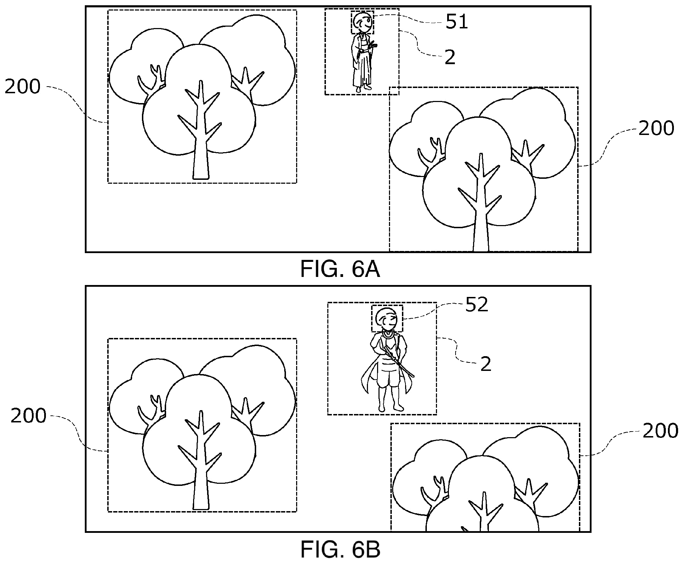

FIGS. 6A and 6B each show a diagram illustrating an example in which the first character 1 approaches and images the second character 2. FIG. 6A illustrates an example of a screen of the second character 2 when the second character 2 has entered the range of the field of view of the first character 1 but remains away from the first character 1 by at least a predetermined distance. Specifically, the first character 1 and the second character 2 are moving on the basis of operation commands from the respective players. When the second character 2 has entered the range of the field of view of the first character 1 but remains away from the first character 1 by at least a predetermined distance, the game server 10 does not need to change the basic facial expression 51 of the second character 2. At this time, the player operating the first character 1 may obtain, on the user terminal 20, an image of the second character 2 having the basic facial expression 51.

FIG. 6B illustrates an example of a screen of the second character 2 when the second character 2 approaches the first character 1 and enters within a predetermined distance from the first character 1. Specifically, when the first character 1 approaches the second character 2 and the second character 2 enters the imaging range of the first character 1, the game server 10 may detect the second character 2 and the facial expression thereof, and may change the basic facial expression 51 of the second character 2 to the first facial expression 52. At this time, the facial expression of the second character 2 may change in accordance with the coordinate information of the first character 1 and the second character 2. As an example, when the first character 1 approaches the second character 2 and a difference between the coordinate information of the first character 1 and the coordinate information of the second character 2 decreases, the game server 10 may gradually change the facial expression of the second character 2 from the basic facial expression 51 to the first facial expression 52. In contrast, when the first character 1 is away from the second character 2 and a difference between the coordinate information of the first character 1 and the coordinate information of the second character 2 increases, the game server 10 may gradually change the facial expression of the second character 2 from the first facial expression 52 to the basic facial expression 51.

### Facial Expression Change Example 3

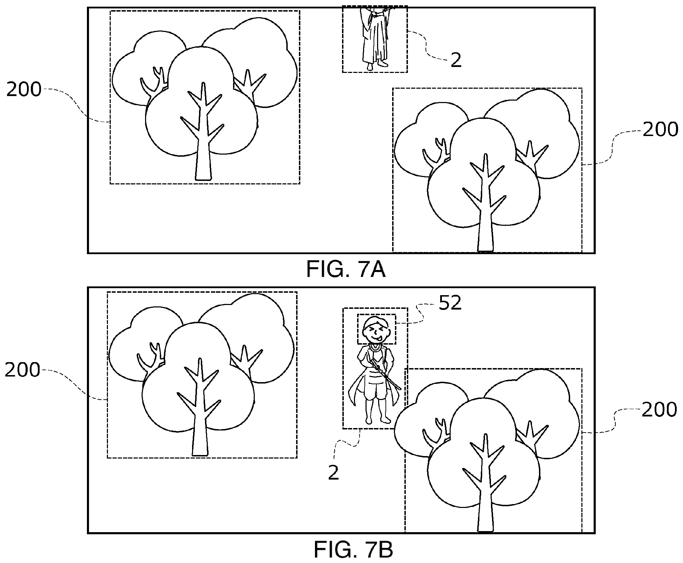

FIGS. 7A and 7B each show a diagram illustrating an example in which the second character 2 gradually enters the imaging range of the first character 1. Among these, FIG. 7A shows an example of a screen when the second character 2 has not entered the range of the field of view of the first character 1. In this case, the facial expression of the second character 2 does not need to be displayed on the screen of the player that operates the first character 1.

FIG. 7B shows an example in which the second character 2 has entered the imaging range of the first character 1. In this case, the second character 2 may enter the imaging range of the first character 1 without displaying the facial expression of the second character 2. Further, when the second character 2 enters the imaging range of the first character 1, the game server 10 changes the facial expression of the second character 2. In this case, the facial expression of the second character 2 may be gradually changed from the basic facial expression 51 to the first facial expression 52 and then enter the imaging range of the first character 1, or the facial expression of the second character 2 may be directly changed to the first facial expression 52 and then imaged by the first character 1.

### Facial Expression Change Example 4

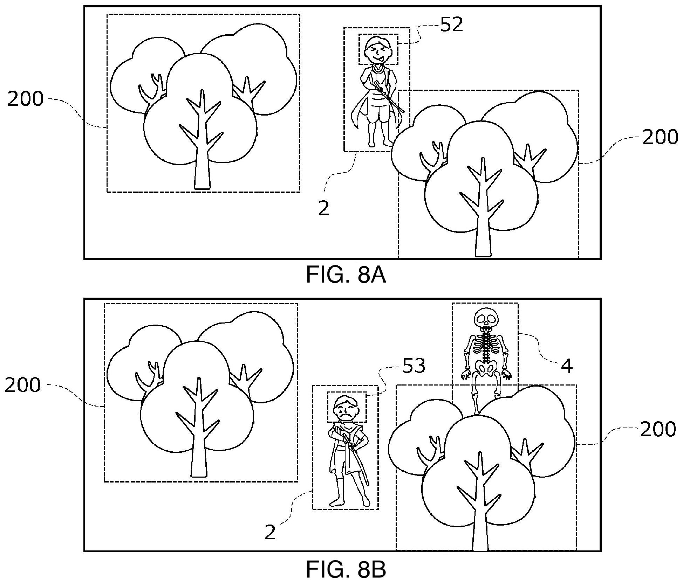

FIGS. 8A and 8B each show a diagram illustrating an example in which a trigger character 4 other than the second character 2 enters the imaging range of the first character 1. The trigger character 4 according to the present disclosure is directed to a character that causes a facial expression of the second character 2 within the imaging range of the first character 1 to change. When the trigger character 4 has not entered the imaging range of the first character 1, the second character 2 may maintain the first facial expression 52 that has been changed from the basic facial expression 51. In contrast, when the trigger character 4 has entered the imaging range of the first character 1, the second character 2 may change the first facial expression 52 to the second facial expression 53 through interaction with the trigger character 4.

FIG. 8A shows an example in which the second character 2 having the first facial expression 52 is in the imaging range of the first character 1. Specifically, within the imaging range of the first character 1, a plurality of contents 200 in the virtual space and the second character 2 having the first facial expression 52 are provided. Within the imaging range of the first character 1, the second character 2 may move with the first facial expression 52 or may interact with another character or content in the virtual space.

FIG. 8B shows a diagram illustrating an example in which the trigger character 4 enters the imaging range of the first character 1. Specifically, when a content or a character other than the second character 2, i.e., the trigger character 4, enters the imaging range of the first character 1, the game server 10 may change the facial expression of the second character 2 from the first facial expression 52 to the second facial expression 53. Further, the facial expression of the second character 2 in Facial Expression Change Example 4 changes depending on the type of the trigger character 4 and the stage. As an example, when the trigger character 4 enters the imaging range of the first character as an NPC that takes a friendly attitude toward the second character 2 (e.g. an NPC that gives material or item rewards to the second character 2), the facial expression of the second character 2 may be changed from the first facial expression 52 to the second facial expression 53 indicating enjoyment. When the trigger character 4 enters the imaging range of the first character 1 as an NPC that is hostile toward the second character 2 (e.g. an NPC that attacks the second character 2), the facial expression of the second character 2 may be changed from the first facial expression 52 to the second facial expression 53 indicating anger. When the trigger character 4 enters the imaging range of the first character 1 as an NPC that gives fear to the second character 2 (e.g. a ghost NPC or a zombie NPC), the facial expression of the second character 2 may be changed from the first facial expression 52 to the second facial expression 53 indicating fear. The facial expressions that can be changed for the second character 2 are not especially limited, and an appropriate facial expression may be output to the user terminal 20 through interaction with the trigger character 4.

Further, the game server 10 may detect whether another character or content is present in an area in the vicinity of the second character 2 (hereinafter, referred to as a sensing range). When the trigger character 4 has entered the sensing range of the second character 2, the game server 10 may detect the trigger character 4 and may change the facial expression of the second character 2 from the first facial expression 52 to the second facial expression 53 on the screen of the player that operates the first character 1. In contrast, when the trigger character 4 has not entered the sensing range of the second character 2, the game server 10 cannot detect the trigger character 4, and the facial expression of the second character 2 may remain as the first facial expression 52 on the screen of the player that operates the first character 1.

Further, when a plurality of trigger characters 4 are present in the sensing range of the second character 2, the game server 10 may detect, on the basis of the coordinate information of the second character 2 and coordinate ranges of the trigger characters 4 within the sensing range, a trigger character that is highly likely to interact with the second character 2 first. As an example, within the imaging range of the first character 1, when the coordinate range of the second character 2 is (10 to 20, 20 to 30, 30 to 40), the coordinate range of a first trigger character is (10 to 20, 20 to 30, 50 to 60), and the coordinate range of a second trigger character is (40 to 50, 60 to 70, 70 to 80), the game server 10 first compares the coordinate ranges of the first trigger character and the second trigger character with the coordinate range of the first character 1. On the basis of a result of the comparison, the game server 10 determines that the first trigger character is highly likely to interact with the second character 2 first. The game server 10 may then change the facial expression of the second character 2 from the first facial expression 52 to a facial expression to be caused by the first trigger character.

### Operation

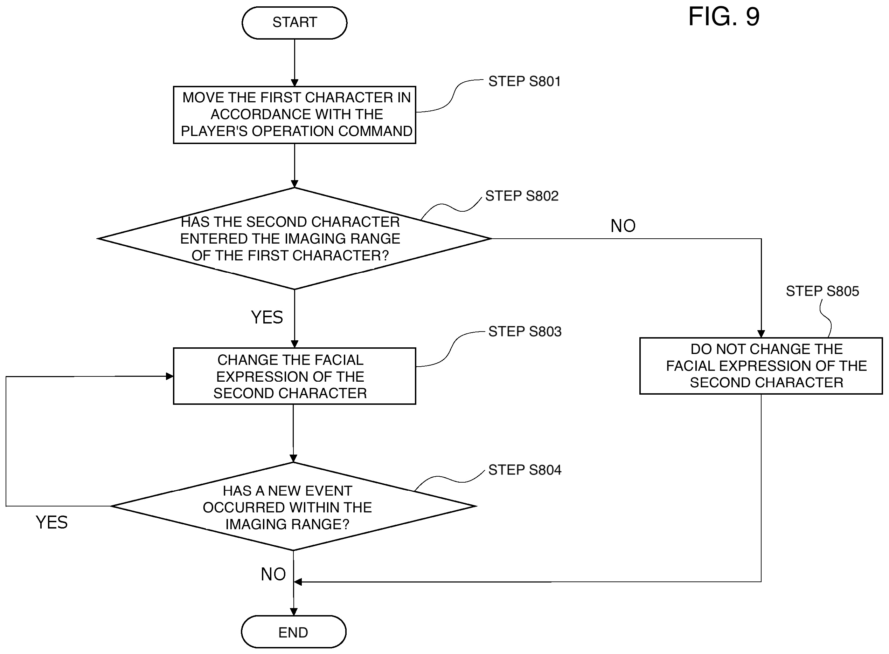

An example of an operation of the game server 10 according to the present disclosure will now be described. FIG. 9 shows a flowchart illustrating an example in which a facial expression of the second character is changed in the virtual space. First, a player that operates the first character enters, on the user terminal 20, an operation command for operating the first character in the virtual space (step S801). The game server 10 moves the first character on the basis of the operation command received from the user terminal 20.

Next, the game server 10 determines whether the second character has entered the imaging range of the first character (step S802). A method for determining whether the second character has entered the imaging range of the first character is not especially limited. For example, the game server 10 may determine whether the second character has entered the imaging range of the first character on the basis of the imaging range defined by a position coordinate, a direction, and an angle of view of a camera held by the first character 1 in the game space.

If the second character has not entered the imaging range of the first character (NO in step S802), the game server 10 need not change the facial expression of the second character (step S805). In contrast, if the second character has entered the imaging range of the first character (YES in step S802), the game server 10 may change the facial expression of the second character (step S803).

The game server 10 then determines whether a new event has occurred within the imaging range of the first character (step S804). The new event according to the present embodiment is directed to an event caused by interaction with the second character within the imaging range of the first character. As an example, an act in which a trigger character that may interact with the second character enters the imaging range of the first character described above, or an effect caused by content within the imaging range, may be treated as the new event.

If the game server 10 determines that a new event has occurred within the imaging range of the first character (YES in step S804), the game server 10 may further change the facial expression of the second character from the basic facial expression to the first facial expression (step S803). The game server 10 then continuously determines whether a new event has occurred within the imaging range (step S804). In contrast, if the game server 10 determines that a new event has not occurred within the imaging range of the first character (NO in step S804), the game server 10 may maintain the facial expression of the second character as it is.

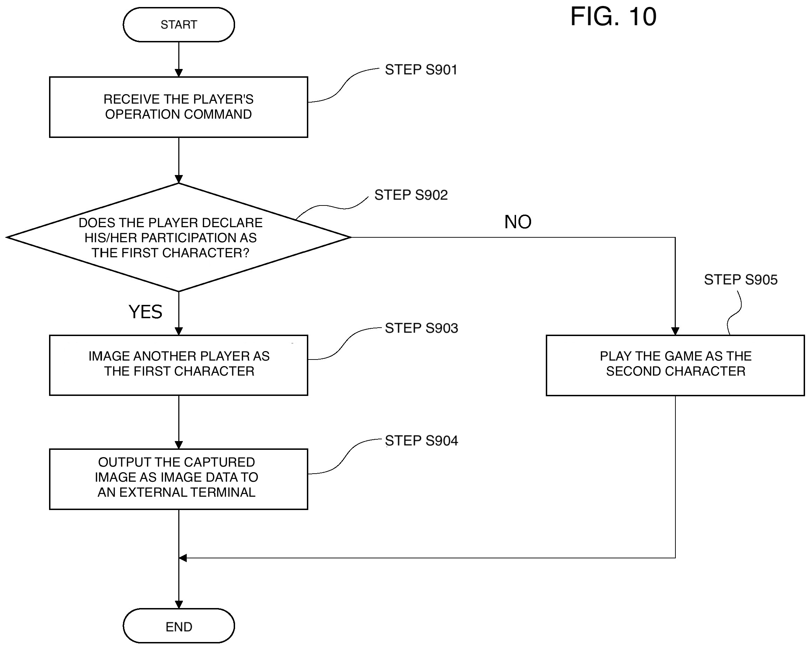

FIG. 10 shows a flowchart illustrating an example of a processing flow in accordance with situations in which respective players participate in the game. First, the game server 10 receives operation commands of the respective players from the user terminals 20 (step S901). However, the information received by the game server 10 is not limited to operation commands of the players, and may correspond to a communication history among the players or an image that a player intends to upload to an SNS.

After receiving the various types of information, the game server 10 determines whether a command for participating in the game as the first character, i.e., a character having a role as a cameraman, has been received from the user terminal 20 (step S902). If the game server 10 receives, from the user terminal 20, a command indicating that the player does not participate in the game as the first character, the game server 10 may treat a character operable by the player on the user terminal as the second character. The player does not need to have authority to image another character. In contrast, if the game server 10 receives, from the user terminal 20, a command indicating that the player participates in the game as the first character, the game server 10 may treat a character operable by the player on the user terminal as the first character. In this case, the player participates in the game as the first character and may have authority to image another character (step S903).

If the player participates in the game as the first character, an image captured by the first character is output to an external terminal as a captured image or as video data (step S904). The quality of the captured image output to the external terminal is not especially limited and may be changed by the external terminal. Specifically, the captured image output by the game server 10 to the external terminal may be editable, and the player may edit the captured image on the user terminal 20 and output the edited image to the external terminal via the game server 10, or the player may edit the captured image on the game server 10 and output the edited image from the game server 10 to the external terminal. Editing according to the present disclosure may include image-quality compression, resizing of the captured image, or cropping of the captured image. The captured image is not limited to a still image and may be a moving image. The game server 10 may also transmit the captured image obtained by the game server 10 to the external terminal at the same time, thereby implementing a live-streaming function.

The game server 10 according to the present embodiment has been described above. Examples of operations and embodiments of the game server 10 are not limited thereto, and the game server 10 may further include an information analysis unit that causes a learning model to learn, as learning data, operation histories of players and analyzes player operations by using artificial intelligence (AI). On the other hand, the same reference numerals are assigned to the same or equivalent components, processes, and signals shown in the respective drawings, and redundant description is omitted as appropriate. Further, in the respective drawings, some components that are not important for description are omitted from illustration.

### Supplemental Description

The game server 10 according to the above embodiment has been described, but the present invention is not limited to the above embodiment. Various variations will be described below.
(1) In the above embodiments, the first character according to the present embodiment may be visible as a normal player character, or may be invisible to other player characters (i.e., the second character, the third character, or another player character). Specifically, if the first character is visible, the game server 10 displays the first character in the virtual space. If the first character is visible, the first character has a model in the virtual space, and another character may interact with the first character. In contrast, if the first character is invisible, the game server 10 does not need to display the first character in the virtual space. If the first character is invisible, the first character does not need to have a model in the virtual space, and another character does not need to interact with the first character.
(2) In the above embodiments, the first character according to the present embodiment may further have hit point (HP), and another character may attack the first character, or may refrain from attacking the first character. Specifically, the game server 10 may perform an HP determination or a death determination for the first character. If the first character has HP, another character can attack the first character to reduce the HP, or can obstruct imaging by the first character in the game (for example, by blocking the field of view of the first character or by attacking the first character to interrupt imaging). Further, if the HP of the first character reaches zero, the player that operates the first character can no longer operate the first character, and the game server 10 may remove the player that operates the first character from the game. In contrast, if the first character does not have HP, another character may attack the first character, and the first character may still perform imaging.
(3) In the above embodiments, the game server 10 according to the present embodiment may include an automatic adjustment function for assisting imaging by the first character. Specifically, if the first character is performing imaging, the game server 10 may have a function of automatically focusing on an imaging target, i.e., the second character. Even if the imaging target, i.e., the second character, moves, the field of view of the first character may automatically focus on the imaging target in accordance with the movement. Further, the game server 10 may include a function of automatically adjusting exposure in accordance with brightness and darkness in the virtual space. As an example, if a sudden explosion or a change in light occurs in the virtual space, the game server 10 may automatically detect illumination conditions in the game and adjust imaging parameters of the first character to allow the first character to continue imaging with appropriate brightness.
(4) In the above embodiments, the game server 10 according to the present embodiment may include a function of allowing the first character to detect an important moment in advance and image the important moment by predicting progress of a battle in the virtual space using artificial intelligence. As an example, the game server 10 analyzes, in terms of time points, a behavior history of an imaged subject, i.e., the second character, and, if an event occurs in the virtual space, the game server 10 may predict what type of action the second character will take and may notify the first character of the predicted action. This allows the first character to image a moment that should be focused on without missing the moment.
(5) In the above embodiments, the game server 10 according to the present embodiment may control imaging by the first character in accordance with the situation of the game. Specifically, before the game starts (i.e., before a battle), the game server 10 causes the first character to participate in the game before the second character and the third character do. If the first character participates in the game first, the player that operates the first character may select, in advance, a position, an angle, and a target that the first character wishes to image. Further, during a time in which the game is in progress (i.e., during a battle), the player that operates the first character may freely move in the virtual space and may obtain various scenes during the battle. If the first character participates in the game during the match, the player that operates the first character may interact with another character in the virtual space. Finally, after the game ends, (i.e., after the battle), the player that operates the first character may image the intensity after the battle in the virtual space and may output the result to an external terminal. Further, if the game server 10 according to the present embodiment provides a massively multiplayer online (MMO) game, the first character may image a particular character as an imaging target and may record growth of the character in the game. Further, the game server 10 according to the present embodiment may provide a function of forming a guild as a group of player characters, and may provide a function for guild-versus-guild battles. At this time, player characters participating in the guild battle correspond to the second characters. The first character according to the present disclosure as a cameraman may image a state of the guild battle by using a camera, and, at this time, the facial expression changing unit 134 of the game server 10 may change a facial expression of the imaged second character in accordance with a situation of the battle. For example, before the guild battle starts, if the second character is imaged, the facial expression changing unit 134 may change the facial expression of the second character to a facial expression indicating tension. Further, during the battle, the facial expression changing unit 134 may change the facial expression to an angry facial expression or a stern facial expression, and, if damage is received, may change the facial expression to a painful facial expression. Further, after the battle, the facial expression changing unit 134 may change the facial expression of the second character of a guild that has won the battle to a joyful facial expression and may change the facial expression of the second character of a guild that has lost the battle to a sad facial expression or a frustrated facial expression. In this case, in the game provided by the game server 10, the first character performs imaging as a battlefield cameraman, and thus may be configured to be drawn into the guild battle, that is, may be attacked or hit by a stray bullet. Further, in the game provided by the game server 10, the second character (or a guild to which the second character belongs) that attacks the first character (cameraman) may be configured to receive some penalty in the game.
(6) In the above embodiments, a game processing method according to the present embodiment causes a computer to execute: a receiving step of receiving operation commands from a plurality of players; a displaying step of displaying, in a virtual space, characters operable by the players; a first controlling step of controlling, as a first character, a character that images another character in accordance with the operation commands; a second controlling step of controlling, as a second character, a character imaged by the first character on the basis of the operation commands; a detecting step of detecting whether the second character enters an imaging range of the first character; a facial expression changing step of changing a facial expression of the second character when the second character enters the imaging range; and an outputting step of outputting, to an external terminal, an image including the second character having the facial expression changed by the facial expression changing step, as an image captured by the first character. This allows the game processing method to achieve the same effects as those of the game server 10 described above.
(7) In the above embodiments, a game program according to the present embodiment causes a computer to execute: a receiving function of receiving operation commands from a plurality of players; a displaying function of displaying, in a virtual space, characters operable by the players; a first controlling function of controlling, as a first character, a character that images another character in accordance with the operation commands; a second controlling function of controlling, as a second character, a character other than the first character on the basis of the operation commands; a detecting function of detecting whether the second character enters an imaging range of the first character; a facial expression changing function of changing a facial expression of the second character when the second character enters the imaging range; and an outputting function of outputting, to an external terminal, an image including the second character having the facial expression changed by the facial expression changing function, as an image captured by the first character. This allows the game program to achieve the same effects as those of the game server 10 described above.
(8) In the embodiments described above, with respect to the game server, the game processing method, the game program, and the control procedure according to the present embodiment, especially processing procedures described with reference to the flowcharts and block diagrams, some processing methods and procedures may be omitted, newly added in part, replaced between procedures, or reordered. Processing procedures subjected to such omission, addition, replacement, or reordering are also included within the scope of the present disclosure if they are not departed from the spirits of the present disclosure.

### Description of Reference Numerals

1: First Character
2: Second Character
3: Third Character
4: Trigger Character
10: Game Server
11: Reception Unit
12: Display
13: Controller
131: First Controller
132: Second Controller
133: Detection Unit
134: Facial Expression Changing Unit
135: Quality Changing Unit
20: User Terminal
21: User Terminal A
22: User Terminal B
23: User Terminal C
24: User Terminal D
100: Virtual Space
200: Content in Virtual Space
300: Imaging Range
51: Basic Facial Expression
52: First Facial Expression
53: Second Facial Expression

## Claims

1. A game server (10) comprising:
a reception unit (11) configured to receive operation commands from a plurality of players;
a display (12) configured to display, in a virtual space (100), characters operable by the players;
a first controller (131) configured to control, as a first character (1), a character that images another character in accordance with the operation commands;
a second controller (132) configured to control, as a second character (2), a character other than the first character (1) on the basis of the operation commands;
a detection unit (133) configured to detect whether the second character (2) enters an imaging range (300) of the first character (1);
a facial expression changing unit (134) configured to change a facial expression of the second character (2) when the second character (2) enters the imaging range (300); and
an output unit (14) configured to output, to an external terminal, an image including the second character (2) having the facial expression changed by the facial expression changing unit (134), as an image captured by the first character (1).

2. The game server (10) according to claim 1, wherein the imaging range (300) is determined by at least one of an imaging direction of the first character (1), an imaging angle of view, coordinates of the first character (1), and a state of the first character (1).

3. The game server (10) according to claim 1, wherein the facial expression changing unit (134) changes the facial expression of the second character (2) on the basis of at least one of an operation command of a player operating the second character (2), a game situation when the first character (1) performs imaging, and an in-game parameter.

4. The game server (10) according to claim 3, further comprising:
a quality changing unit (135) configured to change a quality of imaging by adjusting a viewing angle at which the first character (1) performs imaging in accordance with external information including the imaging range (300), an angle of view, and a type of the external terminal.

5. A game processing method causing a computer to execute:
a receiving step of receiving operation commands from a plurality of players;
a displaying step of displaying, in a virtual space (100), characters operable by the players;
a first controlling step of controlling, as a first character (1), a character that images another character in accordance with the operation commands;
a second controlling step of controlling, as a second character (2), a character imaged by the first character (1) on the basis of the operation commands;
a detecting step of detecting whether the second character (2) enters an imaging range (300) of the first character (1);
a facial expression changing step of changing a facial expression of the second character (2) when the second character (2) enters the imaging range (300); and
an outputting step of outputting, to an external terminal, an image including the second character (2) having the facial expression changed by the facial expression changing step, as an image captured by the first character (1).

6. A game program for causing a computer to execute:
a receiving function of receiving operation commands from a plurality of players;
a displaying function of displaying, in a virtual space (100), characters operable by the players;
a first controlling function of controlling, as a first character (1), a character that images another character in accordance with the operation commands;
a second controlling function of controlling, as a second character (2), a character other than the first character (1) on the basis of the operation commands;
a detecting function of detecting whether the second character (2) enters an imaging range (300) of the first character (1);
a facial expression changing function of changing a facial expression of the second character (2) when the second character (2) enters the imaging range (300); and
an outputting function of outputting, to an external terminal, an image including the second character (2) having the facial expression changed by the facial expression changing function, as an image captured by the first character (1).
